(19) Europäisches Patentamt
European Patent Office
Office européen des brevets

(11) Veröffentlichungsnummer: **0 032 188**
**B1**

(12) **EUROPÄISCHE PATENTSCHRIFT**

(45) Veröffentlichungstag der Patentschrift: **18.09.85**

(51) Int. Cl.⁴: **C 08 G 65/32,** B 01 F 17/42

(21) Anmeldenummer: **80107494.9**

(22) Anmeldetag: **01.12.80**

# (54) Oberflächenaktive Verbindungen auf Basis arylierter Fettkörper und deren Verwendung.

(30) Priorität: **11.12.79 DE 2949694**

(43) Veröffentlichungstag der Anmeldung:
**22.07.81 Patentblatt 81/29**

(45) Bekanntmachung des Hinweises auf die Patenterteilung:
**18.09.85 Patentblatt 85/38**

(84) Benannte Vertragsstaaten:
**BE CH DE FR GB IT LI NL**

(56) Entgegenhaltungen:
**DE-A-1 719 402**
**DE-A-2 132 403**
**DE-A-2 161 097**
**DE-A-2 504 136**
**DE-A-2 705 441**
**DE-A-2 805 341**
**DE-A-2 840 113**
**DE-A-2 854 643**
**US-A-3 102 893**

(73) Patentinhaber: **HOECHST AKTIENGESELLSCHAFT**
**Postfach 80 03 20**
**D-6230 Frankfurt am Main 80 (DE)**

(72) Erfinder: **Uhrig, Heinz**
**Feldbergstrasse 59**
**D-6374 Steinbach/Taunus (DE)**
Erfinder: **Ehl, Klaus, Dr.**
**Geisenheimer Strasse 92**
**D-6000 Frankfurt am Main 71 (DE)**
Erfinder: **Deubel, Reinhold, Dr.**
**Geierfeld 51**
**D-6232 Bad Soden am Taunus (DE)**

**EP 0 032 188 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Gegenstand der Erfindung sind Verbindungen der allgemeinen Formel

$$A{+}[(Y—O)_n—Y—W—Z]_m \qquad (1)$$

in welcher bedeuten:

A ist der Rest eines oxarylmodifizierten Fettalkohols oder einer oxarylmodifizierten Fettsäure oder deren Veresterungsprodukt mit einem Alkohol,

m ist eine ganze Zahl von 1 bis 7,

Y steht jeweils für gleiche oder verschiedene Reste der Formeln

$$—CH_2—CH_2— \text{ und } —CH_2—CH(CH_3)—,$$

n ist eine ganze Zahl von Null bis 149,

W ist eine direkte Bindung oder eine Gruppe der Formel

$$—O—CH_2—CHOH—CH_2—,$$

Z steht, sofern W eine direkte Bindung ist, für gleiche oder verschiedene Gruppen der Formeln

$—OH,$

$—O—CO—CH_2—CH(SO_3M)—COOM,$

$—O—SO_3M,$

$—O—CO—CH{=}CH—COOM,$

$—NR—CH_2—CH_2—SO_3M,$

$—NR— CH_2 —COOM$ und

$—O—(CH_2)_2—SO_3M$

in welchen

M ein Kation und

R ein Wasserstoffatom oder eine Methylgruppe bedeuten, oder

Z steht, falls W eine Gruppe der Formel $—O—CH_2—CHOH—CH_2—$ ist, für gleiche oder verschiedene Reste der Formeln

$—SO_3M,$

$—NR—CH_2—CH_2—SO_3M,$

$—NR— CH_2 —COOM$ und

$—O—(CH_2)_2—SO_3M$

in welchen

R und M die obengenannten Bedeutungen haben.

Ausgenommen sind die Oxalkylierungsprodukte von dimeren Friedel-Crafts-Reaktionsprodukten aus 1 Mol eines Phenols und 2 Mol eines ungesättigten Fettsäureesters einer ungesättigten Fettsäure von 10 bis 22 C-Atomen und einem einwertigen Alkohol von 1 bis 8 C-Atomen gemäß der DE—A—2 161 097.

Aus dieser Druckschrift ist ein Verfahren zur Herstellung dimerer saurer Ester bekannt, bei welchem Ester ungesättigter Fettsäuren in Gegenwart von Friedel-Crafts-Katalysatoren mit phenolischen Verbindungen umgesetzt werden. An die Reaktionsprodukte kann Ethylenoxid, Propylenoxid oder dergleichen addiert werden, so daß man oberflächenaktive Mittel erhält.

Der oxaryl-modifizierte Fettalkohol- oder Fettsäurerest A leitet sich vorzugsweise von folgenden Verbindungen ab:

a) modifizierte Fettsäuren und/oder deren Gemische, wie sie durch Friedel-Crafts-Reaktion mit aromatischen Hydroxyverbindungen aus ungesättigten Fettsäuren gewonnen werden,

b) Veresterungsprodukte und/oder deren Gemische, wie man sie durch Veresterung aus 1 Mol eines 1-

bis 6-wertigen niedermolekularen Alkohols mit 1 bis 4, vorzugsweise 1 bis 2 Mol einer nach a) modifizierten Fettsäure und/oder deren Gemischen erhält,

c) Veresterungsprodukte und/oder deren Gemische, wie man sie durch Veresterung aus 1 Mol eines niedermolekularen Alkylolamins mit 1 Mol einer nach a) modifizierten Fettsäure und/oder deren Gemischen erhält,

d) modifizierte Fettalkohole und/oder deren Gemische, wie sie durch Friedel-Crafts-Reaktion mit aromatischen Hydroxyverbindungen aus ungesättigten Fettalkoholen gewonnen werden,

e) modifizierte natürliche oder synthetische Fette und/oder deren Gemische, wie sie durch Reaktion mit aromatischen Hydroxyverbindungen aus ungesättigten Fetten und Ölen, insbesondere Rizinusöl, gewonnen werden.

Y ist vorzugsweise $-CH_2-CH_2-$

Z steht vorzugsweise für eine der folgenden Gruppen:

$$OH,\ -O-CO-CH_2-\underset{\displaystyle SO_3H}{\underset{|}{CH}}-COOM,\ -O-SO_3M$$

oder

$$-O-OC-CH{=}CH-COOM.$$

Der Index n ist vorzugsweise 1 bis 19, m ist vorzugsweise 1 bis 3 und M vorzugsweise Wasserstoff, ein Alkalimetall, ein Äquivalent Erdalkalimetall, eine Ammoniumgruppe, insbesondere eine sich von einem niedermolekularen Alkylamin oder Alkylolamin ableitende Ammoniumgruppe+)

Gegenstand der Erfindung ist weiterhin die Verwendung dieser Verbindungen als grenzflächenaktive Mittel, insbesondere als Dispergiermittel für die Feinverteilung und Stabilisierung von Feststoffen, sowie als Netz-, Emulgier-, Egalisier- und Färbereihilfsmittel.

Im folgenden beziehen sich Prozentangaben auf das Gewicht, wenn nichts anderes angegeben ist.

Die erfindungsgemäßen Verbindungen werden erhalten, indem man Hydroxyaromaten mit ungesättigten Fettalkoholen oder mit ungesättigten Fettsäuren bzw. Hydroxyfettsäuren bzw. deren Veresterungsprodukten mit einwertigen Alkoholen oder mit ungesättigten Fetten und Ölen alkyliert und anschliessend gegebenenfalls die noch freie Carboxygruppe mit mehrwertigen Alkoholen oder Alkylolaminen verestert. Die so erhaltenen Alkylierungsprodukte bzw. deren Gemische werden anschließend mit Ethylenoxid und/oder Propylenoxid oxalkyliert und die entstandenen Alkylenoxidaddukte gegebenenfalls mit Maleinsäureanhydrid, Epichlorhydrin, Amidosulfonsäure, Chlorsulfonsäure oder Schwefeltrioxid umgesetzt, wobei an die Umsetzungsprodukte mit Epichlorhydrin Hydroxy- oder Aminocarbon- oder -sulfonsäuren und gegebenenfalls auch an die Maleinsäurehalbester Alkali- und Erdalkalisulfite oder -hydrogensulfite addiert werden können.

Als Ausgangsprodukte eignen sich insbesondere

a) handelsübliche ungesättigte Fettsäuren oder Hydroxyfettsäuren wie Palmitoleinsäure, Ölsäure, Undecylensäure und Rizinolsäure, Fettsäuremonoester (mit bevorzugt geradkettigen einwertigen Alkoholen mit bis zu 6 C-Atomen, insbesondere bis zu 4 C-Atomen) wie Ölsäuremethyl-, propyl- und butylester, Rizinolsäuremethyl-, propyl- und butylester sowie handelsübliche vorwiegend unverzweigte Fettalkohole wie 10-Undecenol, 11-Dodecenol, 12-Tridecenol, 14-Pentadecenol, 9-Hexadecenol, cis-9-Octadecenol, 12-Hydroxy-9-octadecenol und/oder Gemische, ferner Fette und Öle mit ungesättigten Fettsäuren wie Rizinusöl,

b) Hydroxyaromaten, die gegebenenfalls weiter substituiert, beispielsweise benzyliert, sein können, wie Phenol, o-, m- oder p-Kresol, o-Kresolacetat, Guajacol, Phenol- methyl- oder ethylether sowie α-Naphthol und β-Naphthol, wie sie üblicherweise zur Arylierung von Olefinen verwendet werden, und zwar in Gegenwart von stark sauren oder säureabspaltenden Katalysatoren, wie z.B. Bortrifluorid, Aluminiumchlorid, p-Toluolsulfonsäure, Methansulfonsäure, Mineralsäuren oder Ionenaustauschern bei Temperaturen zwischen 50 bis 200°C, vorzugsweise 120 bis 160°C, gegebenenfalls im organischen Medium, wobei auf 1 Mol der genannten Phenole oder Naphthole 0,5 bis 1,1 Mol, vorzugsweise 0,9 bis 1 Mol der ungesättigten Fettsäuren, Fettsäuremonoester oder Fettalkohole verwendet werden.

Als Vertreter der mehrwertigen, vorzugsweise niedermolekularen aliphatischen Alkohole oder Alkylolamine zur Veresterung der Alkylierungskörper mit freier Carboxygruppe seinen genannt: Glycerin, Polyglycerine, 1,2,4-Butantriol, Butandiol-(1,4), Glykol, Polyglykole, 1,1,1-Trimethylolethan, 1,1,1-Trimethylolpropan, Pentaaerythrit, 2,4-Di-hydroxy-3-methylol-pentan, Hexantriol, Sorbit, Anhydrosorbit, Hexit oder Mannit sowie Mono-, Di- und Triethanolamin.

Die Veresterung der Alkylierungskörper mit den mehrwertigen Alkoholen oder Alkylolaminen erfolgt vorzugsweise im Molverhältnis 1:1 bis 4:1, insbesondere 1:1 bis 2:1 bei 180 bis 300°C, vorzugsweise bei

---

+)oder ein daraus hergestelltes Oxalkylat, wie es durch Anlagerung von 1 bis 150 Mol, vorzugsweise 2 bis 25 Mol, Ethylenoxid und/oder Propylenoxid auf 1 Mol Alkylamin oder Alkylolamin erhalten wird.

200 bis 270°C, gegebenenfalls unter Zusatz eines Schleppmittels wie eines aromatischen Kohlenwasserstoffes oder Chlorkohlenwasserstoffes. Als Katalysatoren können z.B. Benzolsulfonsäure, p-Toluolsulfonsäure, Borsäure, Zinnpulver oder Schwefelsäure verwendet werden.

Die Oxalkylierung der Alkylierungskörper oder deren Veresterungsprodukte erfolgt nach bekannten Methoden, vorzugsweise mit Alkalihydroxiden oder -alkoxiden als Katalysator bei 100 bis 200°C, bevorzugt bei 140 bis 180°C. Die Menge Ethylenoxid und/oder Propylenoxid wird so bemessen, daß eine stabile Emulgierbarkeit bzw. eine völlige Löslichkeit der Anlagerungsprodukte in Wasser erreicht wird. Bevorzugt werden an jede freie Carboxy- und Hydroxygruppe der Alkylierungsprodukte bzw. der daraus hergestellten Veresterungsprodukte je 1 bis 150, vorzugsweise 2 bis 20, insbesondere 8 bis 20 Mol Ethylenoxid und/oder Propylenoxid angelagert. Die Menge des angelagerten Alkylenoxids bemißt sich auch nach dem beabsichtigten Einsatzzweck und damit dem angestrebten Grad der Hydrophilie.

Als Alkalihydroxid eignen sich Kaliumhydroxid oder bevorzugt Natriumhydroxid, als Alkalialkoxid Natriummethylat oder -ethylat; die Konzentration soll bevorzugt 0,05 bis 1,0%, bezogen auf Alkylierungskörper oder Veresterungsprodukte bei Beginn der Oxalkylierung sein. Die Oxalkylierungs kann drucklos oder in Druckgefäßen mit Propylenoxid oder bevorzugt Ethylenoxid oder Mischungen von beiden durchgeführt werden, wobei das Alkylenoxid gasförmig oder flüssig zugeführt werden kann. Der Arbeitsdruck beträgt 1 bis 10, vorzugsweise 2 bis 4 bar. Gegebenenfalls werden die Oxalkylate neutralisiert, z.B. mit Essigsäure.

Im folgenden werden einige zweckmäßige Verfahren zur Einführung der anionaktiven Gruppe(n) näher beschrieben:

Die Reaktion der Oxalkylate mit Maleinsäureanhydrid zu den Maleinsäurehalbestern erfolgt durch Mischen der Komponenten und Verrühren bei 20 bis 100°C, bevorzugt bei 40 bis 80°C, in Anwesenheit von Alkalihydroxiden, deren Konzentration 0,1 bis 1,0%, bezogen auf die Gesamtmischung, betragen soll. Da Maleinsäureanhydrid zur Sublimation neigt, ist es vorteilhaft, in Druckgefäßen unter einem Überdruck von 0,2 bis 1,0 bar Stickstoff oder Luft zu arbeiten und für kräftige Durchmischung zu sorgen, da zu Beginn der Reaktion das geschmolzene Maleinsäureanhydrid mit den Oxalkylaten schlecht mischbar ist. Die Menge des Maleinsäureanhydrids kann so bemessen werden, daß alle Oxalkylat-Hydroxyendgruppen oder nur ein Teil hiervon, vorzugsweise jedoch mindestens eine, umgesetzt werden. Die Überführung dieser Maleinsäurehalbester-Verbindungen in die entsprechenden Sulfobernsteinsäurehalbester erfolgt durch Zugabe wäßriger Lösungen von Sulfiten oder Hydrogensulfiten. Auf jede Maleinsäurehalbestergruppe werden 1,0 bis 1,5, bevorzugt 1,05 bis 1,1 Äquivalente Alkali- oder Erdalkalisulfit, -hydrogensulfit bzw. -pyrosulfit eingesetzt. Die Sulfite sind dabei besonders geeignet, da hierbei die Di-Salze der Sulfobernsteinsäurehalbester entstehen. Die zugesetzte Wassermenge kann 50 bis 85%, bezogen auf die gesamte Lösung bzw. Mischung, betragen und ist von der Löslichkeit der Sulfobernsteinsäurehalbestersalze und der Viskosität der Lösung abhängig. Die Reaktionstemperaturen betragen 20 bis 100°C, bevorzugt 40 bis 80°C.

Die Sulfatierung der Oxalkylate erfolgt nach bekannten Verfahren. Als Sulfatierungsreagenz kann man $SO_3$-Gas, mit Inertgas verdünnt, oder ein $SO_3$-Addukt, z.B. $SO_3$-Dioxan, Amidosulfonsäure oder Chlorsulfonsäure, verwenden. Gegebenenfalls kann man ein inertes Verdünnungsmittel wie Methylenchlorid einsetzen. Die Menge des einzusetzenden Sulfatierungsreagenzes kann so bemessen sein, daß alle Oxalkylat-Hydroxyendgruppen oder nur ein Teil hiervon umgesetzt werden. Die bei der Sulfatierung mit gasförmigen Schwefeltrioxid in Inertgas in der Säureform anfallenden Schwefelsäurehalbester können durch Neutralisation in die gewünschten Salze mit entsprechenden anorganischen oder organischen Basen übergeführt werden.

Für die Herstellung der sulfo- und carboxygruppenhaltigen Kondensationsprodukte werden am Ende der Ethylenoxid- und/oder Ethylenoxid/Propylenoxidkette(n) reaktionsfähige Gruppen, bevorzugt Chloratome, in das Molekül eingeführt. Dies erfolgt beispielsweise durch Anlagerung von Epichlorhydrin an die endständige(n) Hydroxygruppe(n) nach bekannten Verfahren bei Temperaturen zwischen 20 und 100°C, vorzugsweise zwischen 40 und 90°C, in Gegenwart von Zinntetrachlorid oder durch direkte Halogenierung mit Halogenierungsmitteln wie Thionylchlorid bei Temperaturen zwischen 40 und 100°C, vorzugsweise 40 bis 80°C, wobei die endständige(n) OH-Gruppe(n) teilweise oder ganz gegen Chloratome ausgetauscht werden. Die so erhaltenen chlorhaltigen Zwischenprodukte werden nach bekannten Verfahren mit Natriumsulfit in einem Druckgefäß bei Temperaturen zwischen 100 und 200°C, vorzugsweise bei 140 bis 180°C, oder mit Isoethionsäure, Taurin, Methyltaurin oder Sarkosin bei Temperaturen zwischen 40 und 60°C im alkalischen Medium bei pH 8 bis 10 umgesetzt.

Es ist bekannt, daß zur Herstellung von Oil-Additivs und Emulgatoren sowie harzartigen Kondensationsprodukten ungesättigte Fettsäuren mit Hydroxyaromaten aryliert werden können (J. Am. Oil Chemists Soc. 39, 1962, S. 132; US—A—3 192 239; US—A—3 479 377; US—A—3 564 030; DE—A—2 161 097 und JP—A—75—5704.

Die Verwendung von sulfatierten Fettsäuren oder Fettsäureestern, wie Ölsäure, Elaidinsäure oder Rizinolsäure bzw. deren niederen Alkylestern, z.B. Ethyl-, Propyl- oder Butylester, als Dispergier- und Netzmittel ist ebenfalls bekannt (DE—A—2 244 263; Lindner, Tenside-Textilhilfsmittel-Waschrohstoffe, 1964, S. 635).

Weiterhin sind als anionische Dispergiermittel bekannt (DE—A—2 244 263) sulfatierte Ethylenoxidaddukte wie sulfatierte Anlagerungsprodukte von 1 bis 10 Mol Ethylenoxid an Fettsäureamide oder Amine,

insbesondere auch an Fettsäuren und aliphatische Alkohole mit 8 bis 20 Kohlenstoffatomen wie Ölsäure und Oleylalkohol. Ferner sind Reaktionsprodukte aus Fettsäuren und Alkylolamin, sowie Anlagerungsprodukte von Alkylenoxid an Fettsäuren bzw. Ester aus Polyalkoholen und Fettsäuren mit 12 bis 18 Kohlenstoffatomen bekannt. Bekannt sind auch Sulfobernsteinsäurehalbester von oxalkylierten Alkylphenolen (DE—A—21 32 403), Ethersulfonate von oxalkylierten Alkylphenolen (DE—A—28 54 643) sowie Polyether-hydroxypropansulfonate (US—A—3 102 893).

Bei den erfindungsgemäßen Verbindungen und deren Gemischen handelt es sich um Substanzen mit äußerst vielseitigen oberflächenaktiven Eigenschaften. Sie ergeben in Wasser stabile Emulsionen bzw. sind in Wasser klar löslich. Sie senken die Oberflächenspannung nach der Ringabreißmethode (DIN 53 914) und sind nach dem Ross-Miles Test (DIN 53 902) schaumarm bis nahezu schaumfrei. Außerdem netzen sie Baumwollgewebe nach der Tauchnetzmethode (DIN 53 901) und sind gegen Alkali sowie starke Säuren unter üblichen Anwendungsbedingungen der Tenside beständig.

Die erfindungsgemäßen Substanzen können sowohl als Emulgatoren als auch als Dispergiermittel für die verschiedensten Anwendungsbereiche verwendet werden. Dies gilt vor allem für die Anwendung als Kupplungshilfsmittel bei der Herstellung von Azoverbindungen, insbesondere von Azopigmenten, sowie als Dispergiermittel bei der Herstellung von Farbmitteldispersionen, vorzugsweise Dispersionsfarbstoffen, ferner für die Formulierung von Pigmentpräparationen, Pflanzenschutz- und Schädlingsbekämpfungsmitteln, Carrieremulsionen sowie als Egalisier- und Färbereihilfsmittel. Die Produkte können biologisch abgebaut werden.

Die erfindungsgemäßen Verbindungen können allein, als Gemisch oder in Kombination mit anderen nichtionogenen sowie anionenaktiven oder kationaktiven Verbindungen, Gerüststoffen und anderen Zusatz- und Hilfsstoffen in Emulgier- und Dispergiermittelformulierungen zur Anwendung kommen.

Die nachfolgenden Beispiele dienen zur näheren Erläuterung der Erfindung.

## Beispiele

In den folgenden Beispielen A—T wird die Herstellung der erfindungsgemäßen Verbindungen beschrieben. Teile und Prozentangaben beziehen sich auf das Gewicht, Druckangaben sind "Überdruck", sofern nichts anderes angegeben ist.

### Verbindungen A

a) Herstellung der Fettsäure-β-naphthol-verbindung

144 Tl. β-Naphthol und 282 Tl. Ölsäure werden in 300 ml Toluol gelöst und auf 120 bis 125°C erhitzt. Nach Zugabe von 42,9 Tl. Bortrifluorid-Ethylether-Komplex wird bei gleicher Temperatur unter einer Stickstoffatmosphäre 18 Stunden unter Rückfluß gerührt. Nach dem Auswaschen des Katalysators wird mit wasserfreiem Natriumsulfat getrocknet und filtriert. Die flüchtigen Bestandteile werden durch Vakuumdestillation oder am Rotationsverdampfer entfernt.

b) Herstellung der Fettsäure-β-naphthol-oxethylate

200 Tl. arylierte Fettsäure a) werden nach Zugabe von 4 Tl. Natriumhydroxid unter Zuführung von 310 Tl. Ethylenoxid innerhalb 3 Stunden bie 180 bis 190°C und einem Druck von 2,2 bis 2,6 bar oxethyliert. Wenn das ganz Ethylenoxid aufgedrückt ist, wird eine Stunde bie 180 bis 190°C nachgerührt. Das erhaltene weichpastöse, olivbraune Oxethylat enthält 15 Mol Ethylenoxid und ist in Wasser klar löslich. Der Trübungspunkt in 25 %iger Butyldiglykollösung liegt bei 61,0°C.

c) 200 Tl. arylierte Fettsäure a) werden entsprechend b) mit 1408 Tl. Ethylenoxid unter den gleichen Bedingungen in 6 Stunden oxethyliert. Das erhaltene feste gelbbraune Oxethylat enthält 75 Mol Ethylenoxid und hat in 10 %iger Kochsalzlösung einen Trübungspunkt von 68,5°C.

d) Herstellung eines Mono-sulfobernsteinsäurehalbesters

67,0 Tl. Oxalkylat b) werden mit 6,4 Tl. Maleinsäureanhydrid unter Rühren bei 40 bis 80°C versetzt und 3 bis 3,5 Stunden bei 50 bis 80°C gerührt. Anschließend wird eine Lösung bestehend aus 8,0 Tl. Natriumsulfit (wasserfrei) und 122 Tl. Wasser innerhalb 15 bis 120 Minuten zugerührt. Nach dem Klarwerden des Ansatzes wird noch 1 Stunde bei gleicher Temperatur nachgerührt. Die Menge des zugesetzten Wassers kann zwischen 50 und 85 Gewichtsprozent der Endlösung betragen.

e) Herstellung eines Di-sulfobernsteinsäurehalbesters

50 Tl. Oxalkylat b) werden mit 9,45 Tl. Maleinsäureanhydrid entsprechend d) zum Di-Halbester umgesetzt und anschließend mit einer Lösung bestehend aus 12,18 Tl. Natriumsulfit und 107,44 Tl. Wasser versetzt.

### Verbindungen B

a) 144 T. β-Naphthol und 282 Tl. Ölsäure werden in Gegenwart von 21 Tl. eines stark sauren Ionenaustauschers unter ständiger Überlagerung von Stickstoff 36 Stunden bei 150 bis 160°C am Rückfluß gerührt. Anschließend wird der Ionenaustauscher durch Filtration entfernt.

Herstellung der Fettsäure-naphthol-oxalkylate
b) 200 Tl. arylierte Fettsäure a) werden nach Zugabe von 3 Tl. Natriumhydroxid unter Zuführung von 310 Tl. Ethylenoxid entsprechend Verbindung A/b) umgesetzt. Das erhaltene dickflüssige grünbraune Oxalkylat enthält 15 Mol Ethylenoxid und ist klar wasserlöslich. Der Trübungspunkt in 25 %iger Butyldiglykollösung liegt bei 64,5°C,

c) 200 Tl. arylierte Fettsäure a) werden nach Zugabe von 3 Tl. Natriumhydroxid unter Zuführung von 1549,2 Tl. Ethylenoxid entsprechend Verbindung A/c) in etwa 6 Stunden oxalkyliert. Das erhaltene wachsförmige gelbbraune Addukt enthält 75 Mol Ethylenoxid. Der Trübungspunkt in 10 %iger Kochsalzlösung liegt bei 68,5°C.

d) Herstellung eines Di-sulfobernsteinsäurehalbesters
108,6 Tl. Fettsäurearyladdukt b) werden entsprechend Verbindung A/d) mit 20,58 Tl. Maleinsäureanhydrid innerhalb 3 Stunden bei 40 bis 80°C verestert und anschließend mit einer Lösung von 26,46 Tl. wasserfreiem Natriumsulfit in 233,46 Tl. Wasser bei 50—80°C versetzt. Nach dem Klarwerden wird noch eine Stunde nachgerührt.

Verbindungen C
a) Herstellung des Fettsäure-β-naphthol-glycerinesters
200 Tl. arylierte Fettsäure entsprechend Verbindung B/a) werden mit 43,3 Tl. Glycerin und 120 Tl. Xylol in Gegenwart von 2,6 Tl. Zinnpulver unter einer Stickstoffatmosphäre zum Sieden erhitzt und das Reaktionswasser durch azeotrope Distillation entfernt. Nach etwa 8 bis 10 Stunden ist die Umsetzung beendet. Die flüchtigen Bestandteile werden im Vakuum abdestilliert. Der als Rückstand vorliegende Glycerinester ist flüssig und hat eine Säurezahl (SZ) nach DIN 53 185 von 8.

b) Herstellung eines Fettsäure-β-naphthol-glycerinester-oxalkylates
200 Tl. Fettsäure-β-Naphthol-Glycerinester a) werden nach Zugabe von 1,05 Tl. Natriumhydroxid mit 211 Tl. Ethylenoxid unter den üblichen Bedingungen oxethyliert. Das erhaltene dickflüssige, rotbraune Esteroxethylat enthält 12 Mol Ethylenoxid und ist in Wasser klar löslich. Der Trübungspunkt in 25 %iger Butyldiglykollösung liegt bei 52°C.

c) Herstellung eines Di-maleinsäurehalbesters
200 Tl. Fettsäure-β-Naphthol-Glycerinester a) werden nach Zugabe von 1,05 Tl. Natriumhydroxid mit 528 Tl. Ethylenoxid umgesetzt, so daß ein Oxethylat mit 30 Mol Ethylenoxid erhalten wird. Anschließend wird das Oxethylat mit 78,4 Tl. Maleinsäureanhydrid bei 40 bis 80°C verestert.

Verbindungen D
a) Herstellung des Fettsäure-β-naphthol-pentaerythritesters
200 Tl. arylierte Fettsäure B/a) werden mit 64,0 Tl. Pentaerythrit und 150 Tl. Xylol als Schleppmittel in Gegenwart von 2,6 Tl. Borsäure in einem Rührgefäß unter Abdestillieren des Reaktionswasser innerhalb von 8 bis 10 Stunden bei 140 bis 195°C bei gleichzeitigem Durchleiten von Stickstoff bis zu einer Säurezahl von etwa 25 verestert.

Herstellung von Fettsäure-β-naphthol-pentaerythritester-oxethylaten
b) 200 Tl. Fettsäure-β-Naphthol-Pentaerythritester a) werden nach Zugabe von 1,05 Tl. Natriumhydroxid mit 194 Tl. Ethylenoxid entsprechend Verbindung A/b) umgesetzt. Das erhaltene Esteraddukt ist wachsweich, rotbraun, enthält 12 Mol Ethylenoxid und ist in Wasser klar löslich. Der Trübungspunkt in 25 %igem Butyldiglykol liegt bei 61°C.

c) 200 Tl. Fettsäure-β-Naphthol-Pentaerythritester a) werden entsprechend b) mit 324 Tl. Ethylenoxid umgesetzt. Das erhaltene Ethylenoxidaddukt ist dickflüssig, rotbraun, enthält 20 Mol Ethylenoxid und löst sich klar in Wasser. Der Trübungspunkt in 25 %iger Butyldiglykollösung liegt bei 42°C.

Verbindungen E
a) Herstellung des Fettsäure-α-Naphthol-Glycerinesters
144 Tl. α-Naphthol und 282 Tl. Ölsäure werden in Gegenwart von 21 Tl. eines stark sauren Ionenaustauschers unter ständiger Überlagerung von Stickstoff 36 Stunden bei 150 bis 160°C unter Rückfluß gerührt. Anschließend wird der Ionenaustauscher durch Filtration entfernt.

b) Herstellung des Fettsäure-α-Naphthol-Glycerinesters
200 Tl. arylierte Fettsäure a) werden mit 43,5 Tl. Glycerin und 120 Tl. Xylol in Gegenwart von 2,6 Tl. Zinnpulver zum Sieden unter Rückfluß erhitzt und das Reaktionswasser durch azeotrope Destillation in einem Wasserabscheider gesammelt. Nach etwa 8 bis 10 Stunden ist die Umsetzung beendet. Die flüchtigen Bestandteile werden durch Vakuumdestillation oder am Rotationsverdampfer entfernt. Als Rückstand erhält man einen dunkelbraunen, dickflüssigen Ester mit einer SZ von etwa 25.

c) Herstellung des Fettsäure-α-Naphthol-Glycerinester-Oxethylates

200 Tl. Fettsäure-α-Naphthol-Glycerinesters b) werden nach Zugabe von 1,05 Tl. Natriumhydroxid mit 211 Tl. Ethylenoxid entsprechend Verbindung C/c) oxethyliert. Das Esteraddukt ist rotbraun, gut fließfähig, enthält 12 Mol Ethylenoxid und löst sich gut in Wasser. Der Trübungspunkt in 25 %iger Butyldiglykollösung liegt bei 49,0°C.

d) Herstellung des Di-Sulfonbernsteinsäurehalbesters

200 Tl. Fettsäure-α-Naphthol-Glycerinesteraddukt c) werden entsprechend Verbindung A/d) mit 39,9 Tl. Maleinsäureanhydrid, 51,4 Tl. wasserfreiem Natriumsulfit und 437 Tl. Wasser bei 40—80°C umgesetzt.

Verbindungen F

a) Herstellung des Fettsäure-β-Naphthol-Alkylolaminesters

400 Tl. arylierte Fettsäure B/a) werden nach Zugabe von 57,2 Tl. Monoethanolamin und 60 Tl. Xylol unter Rückfluß allmählich bis auf 190°C erhitzt und das Reaktionswasser dabei durch azeotrope Destillation entfernt. Nach etwa 8 Stunden ist die Umsetzung beendet. Die flüchtigen Bestandteile werden durch Vakuumdestillation entfernt. Der erhaltene Alkylolaminester hat noch eine SZ von etwa 5.

Herstellung der Fettsäure-β-Naphthol-Alkylolamin-Oxethylate

b) 200 Tl. Fettsäure-β-Naphthol-Monoethanolaminester a) werden nach Zugabe von 1,1 Tl. Natriumhydroxid mit 225 Tl. Ethylenoxid bei 160 bis 180°C oxethyliert und 1 Stunde bei 160 bis 180°C nachgerührt. Das erhaltene dickflüssige, braune Amin-Oxethylat enthält 12 Mol Ethylenoxid und ist in Wasser klar löslich. Der Trübungspunkt in 25 %iger Butyldiglykollösung liegt bei 82,0°C.

c) 200 Tl. Fettsäure-β-Naphthol-Alkylolaminester a) werden entsprechend b) mit 1407 Tl. Ethylenoxid umgesetzt. Das erhaltene wachsfeste beigebraune Amin-Oxethylat enthält 75 Mol Ethylenoxid und löst sich klar in Wasser. Der Trübungspunkt in 10 %iger Kochsalzlösung liegt bei 70°C.

Verbindungen G

a) Herstellung der Fettsäuremethylester-β-Naphthol-Verbindung

144 Tl. β-Naphthol und 296 Tl. Ölsäuremethylester werden in Gegenwart von 22 Tl. eines stark sauren Ionenaustauschers unter ständiger Überlagerung von Stickstoff 36 Stunden bei 150 bis 160°C unter Rückfluß gerührt. Anschließend wird der Ionenaustauscher durch Filtration entfernt.

Herstellung der Fettsäure-β-Naphthol-Oxethylate

b) 200 Tl. arylierte Fettsäure a) werden nach Zugabe von 1,1 Tl. Natriumhydroxid unter Zuführung von 240 Tl. Ethylenoxid bei 160—170°C in etwa 3 Stunden oxethyliert und 1 Stunde bei gleicher Temperatur nachgerührt. Das erhaltene zähflüssige grünbraune Oxethylat enthält 12 Mol Ethylenoxid und ist in Wasser klar löslich. Der Trübungspunkt in 25 %iger Butyldiglykollösung liegt bei 52,5°C.

c) 200 Tl. arylierter Fettsäureester a) werden entsprechend b) mit 2004 Tl. Ethylenoxid umgesetzt. Das erhaltene wachsförmige, hellgelbe Oxethylat enthält 100 Mol Ethylenoxid und ist in Wasser klar löslich. Der Trübungspunkt in 10 %iger Kochssalzlösung liegt bei 65°C.

d) Herstellung eines Mono-Sulfobernsteinsäurehalbesters

50 Tl. aryliertes Fettsäureester-Oxethylat b) werden mit 5,3 Tl. Maleinsäureanhydrid versetzt und 3,5 Stunden bei 70 bis 80°C gerührt. Anschließend wird eine Lösung, bestehend aus 6,9 Tl. wasserfreiem Natriumsulfit und 93,4 Tl. Wasser, innerhalb 15 bis 120 Minuten bei 70 bis 80°C zugerührt und nach dem Klarwenden des Ansatzes noch 1 Stunde bei gleicher Temperatur nachgerührt. Die Menge des zugesetzten Wassers kann zwischen 50 und 85 Gewichtsprozent betragen.

Verbindungen H

a) Herstellung der Fettsäurebutylester-β-Naphthol-Verbindung

144 Tl. β-Naphthol und 338 Tl. Ölsäurebutylester werden in Gegenwart von 25 Tl. eines stark sauren Ionenaustauschers unter ständiger Überlagerung von Stickstoff 36 Stunden bei 150 bis 160°C unter Rückfluß gerührt. Der Ionenaustauscher wird anschließend durch Filtration entfernt.

Herstellung der Fettsäureester-β-Naphthol-Oxethylate

b) 200 Tl. arylierter Fettsäureester a) werden nach Zugabe von 2,2 Tl. Natriumethylat entsprechend Verbindung G/b) mit 329 Tl. Ethylenoxid oxethyliert. Man erhält ein wasserlösliches, nicht fließfähiges, grünbraunes (leicht fluoreszierendes) Oxethylat mit 18 Mol Ethylenoxid. Der Trübungspunkt in 25 %iger Butyldiglykollösung liegt bei 62,0°C.

c) 200 Tl. arylierter Fettsäureester a) werden entsprechend b) mit 2739 Tl. Ethylenoxid umgesetzt. Das erhaltene wachsförmige, gelbgrüne Oxethylat enthält 150 Mol Ethylenoxid und ist in Wasser klar löslich. Der Trübungspunkt in 20 %iger Kochsalzlösung liegt bei 52,5°C.

Verbindungen I

a) Herstellung der Oleylalkohol-β-Naphthol-Verbindung

144 Tl. β-Naphthol und 268 Tl. Oleylalkohol werden in Gegenwart von 21 Tl. eines stark sauren Ionenaustauschers unter ständiger Überlagerung von Stickstoff 36 Stunden bei 150 bis 160°C unter Rückfluß gerührt. Anschließend wird der Ionenaustauscher durch Filtration entfernt.

Herstellung der Oleylalkohol-β-Naphthol-Oxalkylate

b) 200 Tl. arylierter Fettalkohol a) werden nach Zugabe von 2 Tl. Natriumhydroxid unter Zuführung von 320 Tl. Ethylenoxid innerhalb 2 Stunden bei 170 bis 180°C und einem Druck von 2—3 bar oxethyliert. Das erhaltene grünbraune pastenförmige Oxethylat enthält 15 Mol Ethylenoxid und löst sich in Wasser. Der Trübungspunkt in 10 %iger Kochsalzlösung liegt bei 66,5°C.

c) 150 Tl. arylierter Fettalkohol a) werden nach Zugabe von 1,5 Tl. Natriumhydroxid unter Zuführung von 2402 Tl. Ethylenoxid entsprechend b) oxethyliert. Das erhaltene gelbgrüne Oxethylat ist fest und enthält 150 Mol Ethylenoxid. Der Trübungspunkt in 10 %iger Kochsalzlösung liegt bei 74°C.

d) 150 Tl. arylierter Fettalkohol a) werden nach Zugabe von 1,5 Tl. Natriumhydroxid unter Zuführung von 578 Tl. Propylenoxid innerhalb 5,5 Stunden bei 160 bis 170°C und einem Druck von 4 bar oxpropyliert. Anschließend werden unter den gleichen Bedingungen noch 2912 Tl. Ethylenoxid angelagert. Das erhaltene hellgrüne, wachsförmige Oxalkylat enthält 27,3 Mol Propylenoxid und 182 Mol Ethylenoxid. Der Trübungspunkt in 10 %iger Kochsalzlösung liegt bei 71°C.

e) Herstellung eines Di-Sulfobernsteinsäurehalbesters

50 Tl. Fettalkohol-β-Naphthol-Oxethylat b) werden gemäß G/d) mit 9,6 Tl. Maleinsäureanhydrid und einer Lösung, bestehend aus 12,3 Tl. wasserfreiem Natriumsulfit in 93 Tl. Wasser, umgesetzt.

Die Menge des zugesetzten Wassers kann zwischen 50 bis 85 Gewichtsprozent der Endlösung betragen.

Verbindungen K

a) Herstellung der Fettsäure-β-Naphthol-Verbindung

144 Tl. β-Naphthol und 298 Tl. Rizinolsäure werden in 300 Tl. Toluol gelöst, auf 120 bis 125°C erhitzt und nach Zugabe von 43,2 Tl. Bortrifluorid-Ethylether-Komplex 20 Stunden bei 120 bis 125°C gerührt. Anschließend wird der Katalysator ausgewaschen und nach Trocknung mit wasserfreiem Natriumsulfat das Toluol durch Vakuumdestillation entfernt.

Herstellung der Fettsäure-β-Naphthol-Oxethylate

b) 200 Tl. arylierte Fettsäure a) werden nach Zugabe von 2 Tl. Natriumhydroxid unter Zuführung von 259 Tl. Ethylenoxid innerhalb 2 Stunden bei 180 bis 190°C und 2,2 bis 2,5 bar oxethyliert und 1 Stunde bei gleicher Temperatur nachgerührt. Das erhaltene leicht viskose, dunkelbraune Oxethylat enthält 13 Mol Ethylenoxid und ist in Wasser mit ganz geringer Opaleszenz löslich. Der Trübungspunkt in 25 %iger Butyldiglykollösung liegt bei 60°C.

c) 200 Tl. arylierte Fettsäure a) werden nach Zugabe von 2 Tl. Natriumhydroxid entsprechend b) mit 1493 Tl. Ethylenoxid in 6 Stunden umgesetzt. Das wachsförmige gelbbraune Oxethylat enthält 75 Mol Ethylenoxid. Der Trübungspunkt in 10 %iger Kochsalzlösung liegt bei 67°C.

d) Herstellung eines Di-Sulfobernsteinsäurehalbesters

101,4 Tl. Fettsäurearyladdukt b) werden mit 20,6 Tl. Maleinsäureanhydrid innerhalb 3 Stunden bei 70 bis 80°C verestert und anschließend mit 26,5 Tl. Natriumsulfit (wasserfrei), gelöst in 223 Tl. Wasser, bei 70 bis 80°C versetzt. Nach dem Klarwerden wird noch 1 Stunde nachgerührt.

Verbindungen L

a) Herstellung der Fettsäure-β-Naphthol-Verbindung

144 Tl. β-Naphthol und 298 Tl. Rizinolsäure werden in Gegenwart von 21 Tl. eines stark sauren Ionenaustauschers unter ständigem Überleiten von Stickstoff 44 Stunden bei 150 bis 160°C unter Rückfluß gerührt. Anschließend wird der Ionenaustauscher durch Filtration entfernt.

b) Herstellung des Fettsäure-β-Naphthol-Alkylolaminesters

200 T. arylierte Fettsäure entsprechend Verbindung a) werden nach Zugabe von 27,6 Tl. Monoethanolamin, 2,5 Tl. Borsäure und 54 Tl. Xylol unter Rückfluß 1 Stunde bei 150 und anschließend bei 170 bis 190°C erhitzt, bis das Reaktionswasser durch azeotrope Destillation entfernt ist. Nach etwa 8 Stunden ist die Umsetzung beendet. Die flüchtigen Bestandteile werden durch Vakuumdestillation entfernt. Der erhaltene Alkylolaminester hat noch eine SZ von etwa 4.

Herstellung der Fettsäure-β-Naphthol-Alkylolamin-Oxalkylate

c) 200 Tl. arylierter Fettsäure-Alkylolaminester b) werden entsprechend Verbindung F/b) nach Zugabe von

1,1 Tl. Natriumhydroxid mit 218 Tl. Ethylenoxid bei 160 bis 180°C oxethyliert. Das erhaltene dickflüssige, dunkelbraune Aminoxethylat enthält 12 Mol Ethylenoxid und ist in Wasser klar löslich. Der Trübungspunkt in 25 %iger Butyldiglykollösung liegt bei 94,5°C.

d) 135 Tl. arylierter Fettsäure-Alkylolaminester b) werden nach Zugabe von 1,5 Tl. Natriumhydroxid unter Zuführung von 425 Tl. Propylenoxid innerhalb 4,5 Stunden bei 160 bis 170°C und einem Druck von 4 bar oxpropyliert. Anschließend werden unter den gleichen Bedingungen noch 2245 Tl. Ethylenoxid angelagert. Das erhaltene wachsförmige braune Oxalkylat enthält 26,1 Mol Propylenoxid und 182 Mol Ethylenoxid. Der Trübungspunkt in 10 %iger Kochsalzlösung liegt bei 69,5°C.

Verbindung M

a) Herstellung des Fettsäure-β-Naphthol-Alkylolaminesters

200 Tl. arylierte Fettsäure entsprechend Verbindung L/a) werden nach Zugabe von 67,4 Tl. Triethanolamin, 2,7 Tl. Borsäure und 168 Tl. Xylol bei gleichzeitiger Überlagerung von Stickstoff unter Rückfluß 1 Stunde bei 150°C gerührt. Anschließend erhitzt man auf 170 bis 190°C, bis das Reaktionswasser durch Destillation entfernt ist. Nach etwa 8—9 Stunden ist die Umsetzung beendet. Die flüchtigen Bestandteile werden durch Vakuumdestillation entfernt. Der erhaltene Alkylolaminester hat noch eine SZ von etwa 6.

b) Herstellung des Fettsäure-β-Naphthol-Alkylolamin-Oxethylates

200 Tl. arylierter Fettsäure-Alkylolaminester a) werden entsprechend Verbindung L/c) nach Zugabe von 1,1 Tl. Natriumhydroxid mit 184 Tl. Ethylenoxid bei 160 bis 170°C in 3 Stunden bei 2—3 bar oxethyliert. Das erhaltene dickflüssige rotbraune Alkylolaminaddukt enthält 12 Mol Ethylenoxid und ist in Wasser klar löslich. Der Trübungspunkt in 25 %iger Butyldiglykollösung liegt bei 78,5°C.

Verbindungen N

a) Herstellung der Fettsäureester-β-Naphthol-Verbindung

144 Tl. β-Naphthol und 354 Tl. Rizinolsäure-n-butylester werden in 300 Tl. Toluol gelöst und nach Zugabe von 49,8 Tl. Bortrifluorid-Ethylether-Komplex bei 120 bis 125°C wird bei gleicher Temperatur noch 6 Stunden nachgerührt. Nach Entfernung des Katalysators und Trocknung mit wasserfreiem Natriumsulfat wird das Toluol durch Vakuumdestillation entfernt.

Herstellung der Fettsäureester-β-Naphthol-Oxethylate

b) 200 Tl. arylierter Fettsäureester a) werden nach Zugabe von 2 Tl. Natriumhydroxid entsprechend Verbindung K/b innerhalb 2 Stunden mit 265 Tl. Ethylenoxid umgesetzt. Das erhaltene wachsweiche, braune Oxethylat enthält 15 Mol Ethylenoxid und ist in Wasser klar löslich. Der Trübungspunkt in 10 %iger Butyldiglykollösung liegt bei 46°C.

c) 200 Tl. arylierter Fettsäureester a) werden nach Zugabe von 2 Tl. Natriumhydroxid entsprechend K/b) mit 1325 Tl. Ethylenoxid in 5 Stunden umgesetzt. Das wachsfeste, hellgelbe Oxethylat enthält 75 Mol Ethylenoxid. Der Trübungspunkt in 10 %iger Kochsalzlösung liegt bei 64,5°C.

d) Herstellung eines Mono-Sulfobernsteinsäureesters

67 Tl. aryliertes Fettsäureesteraddukt b) werden mit 5,95 Tl. Maleinsäureanhydrid in 3 Stunden bei 70 bis 80°C verestert. Man versetzt anschließend mit einer Lösung aus 7,65 Tl. Natriumsulfit (wasserfrei) in 120,9 Tl. Wasser bei 70 bis 80°C. Nach dem Klarwerden wird noch 1 Stunde nachgerührt.

e) Herstellung eines Di-Sulfobernsteinsäurehalbesters

67 Tl. aryliertes Fettsäureesteradduk b) werden gemäß Verbindung N/d) mit 11,9 Tl. Maleinsäureanhydrid und einer Lösung bestehend aus 15,3 Tl. Natriumsulfit in 141,3 Tl. Wasser umgesetzt.

Verbindung O

a) Herstellung der Fettsäureester-β-Naphthol-Verbindung

144 Tl. β-Naphthol und 354 Tl. Rizinolsäure-n-butylester werden in Gegenwart von 25 Tl. eines stark sauren Ionenaustauschers unter ständiger Überlagerung von Stickstoff 48 Stunden bei 150 bis 160°C unter Rückfluß gerührt. Anschließend wird der Ionenaustauscher durch Filtration entfernt.

b) Herstellung des Fettsäureester-β-Naphthol-Oxethylates

200 Tl. arylierter Fettsäureester a) werden entsprechend Verbindung N/c) innerhalb 6,5 Stunden mit 1767 Tl. Ethylenoxid umgesetzt. Das erhaltene wachsförmige, rotbraune Oxethylat enthält 100 Mol Ethylenoxid. Der Trübungspunkt in 10 %iger Kochsalzlösung liegt bei 67,5°C.

Verbindungen P

a) Herstellung der Fettsäure-Phenol-Verbindung

400 Tl. Ölsäure und 147 Tl. Phenol werden in Gegenwart von 50 Tl. eines stark sauren Ionenaustauschers unter Überlagerung von Stickstoff 24 Stunden bei 150 bis 160°C unter Rückfluß gerührt. Der Ionenaustauscher wird durch Filtration entfernt.

b) Herstellung des Fettsäure-Phenol-Oxethylates

170 Tl. arylierte Fettsäure a) werden nach Zugabe von 1 Tl. Natriumhydroxid unter Zuführung von 260 Tl. Ethylenoxid in 2,5 Stunden bei 160 bis 170°C und einem Druck von 4 bar oxethyliert und 1 Stunde bei 160 bis 170°C nachgerührt. Das erhaltene dickflüssige grünbraune Oxethylat enthält 13,4 Mol Ethylenoxid, ist in Wasser durchsichtig-transparent emulgierbar und hat in 25 %iger Butyldiglykollösung einen Trübungspunkt von 81°C.

c) Herstellung des Fettsäure-Phenol-Oxethylat-Maleinsäurehalbesters

50 Tl. Oxethylat b) werden mit 10,6 Tl. Maleinsäureanhydrid bei 70 bis 80°C in 3,5 Stunden umgesetzt und nach Zugabe von 95 Tl. Wasser mit Natronlauge neutralisiert.

d) Herstellung des Di-Sulfobernsteinsäurehalbesters

50 Tl. Oxethylat b) werden mit 10,6 Tl. Maleinsäureanhydrid entsprechend c) verestert und anschließend mit einer Lösung, bestehend aus 13,7 Tl. Natriumsulfit (wasserfrei) und 112 Tl. Wasser, bei 70 bis 80°C versetzt. Nach dem Klarwerden des Ansatzes wird noch 1 Stunde bei gleicher Temperatur nachgerührt. Die Menge des zugesetzten Wassers kann zwischen 50 und 85 Gewichtsprozent der Endlösung betragen.

Verbindungen Q

a) Herstellung der Fettsäureester-m-Kresol-Verbindung

Gemäß Verbindung P werden 104 Tl. techn. m-Kresol mit 354 Tl. Rizinolsäure-n-butylester in Gegenwart von 23 Tl. eines stark sauren Ionenaustauschers umgesetzt und wie oben beschrieben aufgearbeitet.

Herstellung der Fettsäureester-m-Kresol-Oxethylate

b) 200 Tl. arylierter Fettsäureester a) werden nach Zugabe von 1,0 Tl. Natriumhydroxid unter Zuführung von 384 Tl. Ethylenoxid innerhalb von 5 Stunden bei 160 bis 170°C und einem Druck von 3,8 bis 4 bar oxethyliert. Das erhaltene wachsweiche beigebraune Oxethylat enthält 20 Mol Ethylenoxid und ist in Wasser klar löslich. Der Trübungspunkt in 25 %iger Butyldiglykollösung liegt bei 60°C.

c) An 200 Tl. arylierten Fettsäureester a) werden nach Zugabe von 1,0 Tl. Natriumhydroxid entsprechend b) innerhalb 8 Stunden 1921 Tl. Ethylenoxid angelagert. Das erhaltene wachsfeste, gelbbraune Oxethylat enthält 100 Mol Ethylenoxid und hat in 10 %iger Kochsalzlösung einen Trübungspunkt von 64,5°C.

d) Herstellung eines Mono-Sulfobernsteinsäurehalbesters

75 Teile Kresol-Fettsäureester-Oxethylat b) werden nach Zugabe von 5,8 Tl. Maleinsäureanhydrid 3,5 Stunden bei 70 bis 80°C gerührt und anschließend mit einer Lösung aus 7,4 Tl. Natriumsulfit in 132 Tl. Wasser bei gleicher Temperatur umgesetzt. Nach Klarwerden des Konzentrates wird noch 1 Stunde nachgerührt.

Verbindungen R

a) Herstellung der benzylierten Ölsäure-β-Naphtholverbindung

160 Tl. Ölsäure-β-Naphthol-Verbindung B/a) werden bei 60°C mit 2 Tl. Aluminiumchlorid versetzt und auf 100°C erhitzt. Dann läßt mann innerhalb 1 Stunde 47,5 Tl. Benzylchlorid zutropfen und rührt unter einem Stickstoffstrom 2 Stunden bei gleicher Temperatur nach. Anschließend wird die Temperatur auf 120°C gesteigert und weitere 6 Stunden gerührt. Das Aluminiumchlorid wird bei 100°C durch Filtration entfernt.

b) Herstellung des Fettsäure-β-Naphthol-Benzyl-Oxethylates

170 Tl. benzylierte Fettsäure-β-Naphthol-Verbindung a) werden nach Zugabe von 1,5 Tl. Natriumhydroxid unter Zuführung von 261,7 Tl. Ethylenoxid in 3 Stunden bei 170 bis 180°C und einem Druck von 3,2 bis 3,8 bar oxethyliert und 1 Stunde bei gleicher Temperatur nachgerührt. Das erhaltene leicht viskose, grünbraune Oxethylat enthält 16,8 Mol Ethylenoxid und ist in Wasser klar löslich. Der Trübungspunkt in 25 %iger Butyldiglykollösung liegt bei 57,5°C.

c) Herstellung des Mono-Sulfobernsteinsäurehalbesters

50 Tl. Fettsäure-β-Naphthol-Benzyl-Oxethylat b) werden entsprechend Verbindung G/d) mit 9,5 Tl. Maleinsäureanhydrid sowie einer Lösung aus 12,8 Tl. Natriumsulfit (wasserfrei) in 109 Tl. Wasser versetzt und nach dem Klarwerden des Konzentrates noch 1 Stunde gerührt.

Verbindungen S

a) Herstellung der Fettsäureester-Phenol-Verbindung

94 Tl. Phenol und 354 Tl. Rizinolsäure-n-butylester werden in Gegenwart von 22,5 Tl. eines stark sauren Ionenaustauschers entsprechend Verbindung P umgesetzt und aufgearbeitet.

b) Herstellung der Fettsäureester-Phenol-Benzyl-Verbindung

150 Tl. arylierter Fettsäureester und 2 Tl. Aluminiumchlorid werden auf 100°C erhitzt. In 1 Stunde werden 44,2 Tl. Benzylchlorid zugetropft. Unter ständigem Durchleiten von Stickstoff rührt man 2 Stunden bei 100°C, steigert die Temperatur weiter auf 120°C und rührt 6 Stunden bei dieser Temperatur nach. Das Aluminiumchlorid wird durch Filtration entfernt.

c) Herstellung des Fettsäureester-Phenol-Benzyl-Oxethylates

150 Tl. der benzylierten Fettsäureester-Phenol-Verbindung b) werden nach Zugabe von 1,5 Tl. Natriumhydroxid unter Zuführung von 147 Tl. Ethylenoxid innerhalb 8 Stunden bei 190 bis 200°C bei einem Druck von 3,8 bis 4 bar oxethyliert und entsprechend nachgerührt. Das erhaltene leicht viskose braune Oxethylat enthält 12 Mol Ethylenoxid und gibt in Wasser eine milchige stabile Emulsion.

Verbindungen T

a) Herstellung der Rizinusöl-β-Naphthol-Verbindung

118 Tl. β-Naphthol und 381 Tl. Rizinusöl werden in Gegenwart von 25 Tl. eines stark sauren Ionenaustauschers unter einer Stickstoffatmosphäre 48 Stunden bei 150 bis 160°C unter Rückfluß gerührt. Anschließend wird der Ionenaustauscher durch Filtration abgetrennt.

b) Herstellung des Rizinusöl-β-Naphthol-Oxethylates

200 Tl. aryliertes Rizinusöl a) werden nach Zugabe von 1,0 Tl. Natriumhydroxid unter Zuführung von 259 Tl. Ethylenoxid innerhalb 2 Stunden bei 170 bis 180°C und einem Druck von 4 bar oxethyliert. Das erhaltene rotbraune, leicht viskose Oxethylat enthält 36 Mol Ethylenoxid und ist in Wasser klar löslich. Der Trübungspunkt in 25 %igem Butyldiglykol liegt bei 62°C.

c) Herstellung des Di-Sulfobernsteinsäurehalbesters

75 Tl. Rizinusöl-β-Naphthol-Oxethylat b) werden mit 5,2 Tl. Maleinsäureanhydrid, 6,7 Tl. wasserfreiem Natriumsulfit und 125,3 Tl. Wasser umgesetzt. Die Menge des zugesetzten Wassers kann zwischen 50 bis 80 Gewichtsprozent der Endlösung betragen.

d) Herstellung des Tri-Sulfobernsteinsäurehalbesters

75 Tl. Rizinusöl-β-Naphthol-Oxethylat b) werden mit 7,9 Tl. Maleinsäureanhydrid, 10,1 Tl. wasserfreiem Natriumsulfit und 134 Tl. Wasser umgesetzt.

e) Herstellung des Tetra-Sulfobernsteinsäurehalbesters

75 Tl. Rizinusöl-β-Naphthol-Oxethylat b) werden mit 10,5 Tl. Maleinsäureanhydrid, 13,5 Tl. wasserfreiem Natriumsulfit und 141 Tl. Wasser umgesetzt.

f) Herstellung des Penta-Sulfobernsteinsäurehalbesters

75 Tl. Rizinusöl-β-Naphthol-Oxethylat b) werden mit 13,1 Tl. Maleinsäureanhydrid, 16,8 Tl. wasserfreiem Natriumsulfit und 146,0 Tl. Wasser umgesetzt.

Prüfbeispiele

Für die Prüfung der Dispergiereigenschaften der erfindungsgemäßen Substanzen werden nachstehende Prüfverfahren benutzt: Für vergleichende Mahlversuche werden entsprechend der DE—OS—21 32 403 ca. 4 g Farbstoff C.I. Disperse Red 65 (C.I. Nr. 11228) mit der zu prüfenden Verbindung, Wasser und 50 g Sili-Quarzitperlen von 1 mm ϕ mit einem 2-Scheibenrührer ähnlich den üblichen Rührern in Rührwerksmühlen in einem kleinen Zylinder mit einem Laborrührmotor unter Kühlung gemahlen. Der Fortschritt der Feinverteilung wird in regelmäßigen Abständen durch Auslauf-Filterproben und mikroskopische Untersuchung verfolgt und die Güte der Dispersion nach einer 5-Punkte-Skala beurteilt (1=sehr schlecht, 5=sehr gut). Die Lagerstabilität kann man nach Verdünnen der Proben auf die gewünschte Farbstoffkonzentration, Lagern der Proben bei 50°C im Trockenschrank und Wiederholung der Auslaufproben nach z.B. 1, 3 und 6 Wochen Lagerung beurteilen.

Als Maß für das Färbeverhalten bei 106°C wurde ein Gemisch Polyester/Wolle und bei 130°C Polyester nach bekannten Verfahren gefärbt. Das Ergebnis wird in der nachfolgenden Tabelle durch die Ziffern 1 bis 5 festgelegt.

Es bedeuten:

1 kein Färbeverhalten
2 schwach
3 brauchbar
4 gut
5 sehr gut

TABELLE

| Verbindung | Mahlzeit (h) | Dispersions-güte | Lagerstabilität einwandfrei nach Wochen | Polyest./ Woll-Färbung bei 106°C | Polyester-Färbung 130°C |
|---|---|---|---|---|---|
| A/d) | 4 | 5 | 6 | 5 | 5 |
| A/e) | 4 | 5 | 6 | 5 | 5 |
| B/d) | 4 | 5 | 6 | 5 | 5 |
| E/d) | 4 | 5 | 6 | 5 | 5 |
| G/d) | 4 | 5 | 6 | 5 | 5 |
| I/e) | 4 | 5 | 6 | 5 | 5 |
| K/d) | 3 | 5 | 6 | 5 | 5 |
| N/d) | 4 | 5 | 6 | 5 | 5 |
| N/e) | 5 | 5 | 6 | 5 | 5 |
| P/d) | 4 | 5 | 6 | 5 | 5 |
| Q/d) | 4 | 5 | 6 | 5 | 5 |
| R/c) | 4 | 5 | 6 | 5 | 5 |
| T/e) | 4 | 5 | 6 | 5 | 5 |
| T/f) | 4 | 5 | 6 | 5 | 5 |

Die Anwendung der erfindungsgemäßen Substanzen als Kuppelhilfsmittel für Azopigmente wird in den folgenden Beispielen weiter erläutert, ohne auf diese beschränkt zu sein.

Beispiel 1: C.I. Pigment Orange 5 (C.I. Nr. 12075)

11 Tl. Dinitroanilin werden in einer Mischung aus Schwefelsäure und Salzsäure mit 10,4 Tl. 40 %iger Natriumnitritlösung diazotiert.

Eine Lösung von 8,64 Tl. β-Naphthol in einer Mischung von 100 Tl. Wasser und 8 Tl. 33 %iger Natronlauge wird zu einer Mischung von 300 Tl. Wasser und 10 Tl. 31 %iger Salzsäure getropft. Die Kupplung zum Pigment-Orange 5 erfolgt sodann durch Zulauf der geklärten Diazoniumsalzlösung zur Suspension des β-Naphthols. Anschließend wird das Pigment filtriert, mit Wasser gewaschen und schließlich getrocknet.

Die Pigmentqualität läßt sich beeinflussen, in dem man vor der Fällung der Kupplungskomponente zur Lösung des β-Naphthols und/oder zur vorgelegten Salzsäure oberflächenaktive Mittel zugibt:

Beispiel 1a

Man kuppelt Pigment-Orange 5 wie in Beispiel 1 beschrieben, wobei man aber vor dem Eintropfen der β-Naphthol-Lösung noch 1 Tl. der Verbindung K/d) zur vorgelegten Mischung aus 300 Tl. Wasser und 10 Tl. 31 %iger Salzsäure gibt.

Das so erhaltene Pigment unterscheidet sich von dem unter Beispiel 1 beschriebenen durch eine deutlich gelbere Nuance und wesentlich höhere Farbstärke sowohl im Buch- und Offset- druck als auch in wäßrigen Präparationen für den Flexodruck oder für Dispersionsfarben. Die Druckfarben und Präparationen zeichnen sich durch niedrige Viskosität aus. Außerdem zeigt das so erhaltene Pigment im Buch- und Offsetdruck stärkeren Glanz und bessere Transparenz.

Beispiel 1b

Ersetzt man das in 1a genannte Hilfsmittel durch die Verbindung B/d), so läßt sich ein Pigment-Orange 5 mit ähnlich guten Eigenschaften wie unter 1a ausgeführt erhalten.

Beispiel 1c

Verwendet man statt des in 1b genannten Hilfsmittels Verbindung B/b), so erhält man ein Pigment-Orange 5 von etwas röterer Nuance als bei 1b mit ausgezeichnetem Glanz im Buch- und Offsetdruck.

Beispiel 1d

Ersetzt man das in 1a genannte Hilfsmittel durch die Verbindung N/d), so erhält man eine Pigmentqualität ähnlich der unter 1a beschriebenen.

Beispiel 1e

Verwendet man im Verfahren nach Beispiel 1d statt des dort genannten Hilfsmittels die Verbindung N/e), so läßt sich gegenüber Beispiel 1d nochmals eine merkliche Farbstärkesteigerung des Pigmentes erreichen, wobei auch die Nuance weiter nach Gelb verschoben wird.

Beispiel 2: C.I. Pigment Yellow 13 (C.I. Nr. 21100)

25,4 Tl. Dichlorbenzidin werden in 70 Tl. 31 %iger Salzsäure unter Zusatz von Eis mit 34,8 Tl. 40 %iger Natriumnitritlösung bis-diazotiert. 43,4 Tl. N-Acetoacetyl-m-xylidid werden in 600 Tl. Wasser unter Zusatz von 27 Tl. 33 %iger Natronlauge gelöst und dann mit 14 Tl. Eisessig gefällt. Zu dieser Suspension läuft anschließend die geklärte Bis-diazoniumsalzlösung, wobei durch gleichzeitige Zugabe von verdünnter Natronlauge der pH-Wert bei 4,5 gehalten wird. Nach dem Auskuppeln erhitzt man auf 70°C, filtriert ab, wäscht neutral und trocknet das gelbe Pigment.

Die Pigmentqualität läßt sich durch Zugabe von oberflächenaktiven Mitteln zur alkalischen Lösung des N-Acetoacetyl-m-xylidids vor der Fällung mit Eisessig beeinflussen:

Beispiel 2a

Man kuppelt Pigment-Yellow 13 in der in Beispiel 2 beschriebenen Weise, wobei man aber zur alkalischen Lösung der Kupplungskomponente vor der Fällung mit Eisessig noch 3,5 Tl. der Verbindung K/b) hinzugibt.

Das so erhaltene Pigment zeichnet sich gegenüber dem nach Beispiel 2 hergestellten im Buch- und Offsetdruck durch höhere Farbstärke und Transparenz und durch verbesserten Glanz aus.

Beispiel 2b

Ersetzt man das in Beispiel 2a verwendete Hilfsmittel durch die Verbindung B/b), so erhält man ein Pigment Yellow 13 von ähnlich vorteilhafter Qualität wie unter Beispiel 2a beschrieben.

Beispiel 3: C.I. Pigment Orange 34 (C.I. Nr. 21115)

25,4 Tl. Dichlorbenzidin werden wie unter Beispiel 2 beschrieben bisdiazotiert. 39,5 Tl. p-Tolylmethylpyrazolon werden in Wasser unter Zusatz von 29 Tl. 33 %iger Natronlauge gelöst. Die geklärte Pyrazolonlösung läuft anschließend zur Bis-diazoniumsalzlösung. Das Pigment Orange 34 wird abgesaugt, gewaschen und getrocknet.

Durch Zusatz der erfindungsgemäßen Hilfsmittel zur Bisdiazoniumsalzlösung läßt sich die Pigmentqualität verändern:

Beispiel 3a

Man kuppelt in der unter Beispiel 3 beschriebenen Weise, wobei man aber zusätzlich noch 3,5 Tl. der Verbindung K/d) zur Bis-diazoniumsalzlösung hinzufügt. Das so erhaltene Pigment zeichnet sich gegenüber dem nach Beispiel 3 hergestellten durch erhöhte Farbstärke und verbesserten Glanz im Buch- und Offsetdruck aus.

**Patentansprüche**

1. Verbindungen der allgemeinen Formel (1)

$$A\!\left[(Y-O)_n-Y-W-Z\right]_m \qquad (1)$$

in welcher bedeuten:

A ist der Rest eines oxarylmodifizierten Fettalkohols oder einer oxarylmodifizierten Fettsäure oder deren Veresterungsprodukt mit einem Alkohol,

m ist eine ganze Zahl von 1 bis 7,

Y steht jeweils für gleiche oder verschiedene Reste der Formeln

$$-CH_2-CH_2- \text{ und } -CH_2-\underset{\displaystyle CH_3}{\underset{|}{CH}}-,$$

n ist eine ganze Zahl von Null bis 149,

W ist eine direkte Bindung oder eine Gruppe der Formel

$$-O-CH_2-CHOH-CH_2-,$$

Z steht, sofern W eine direkte Bindung ist, für gleiche oder verschiedene Gruppen der Formeln

—OH,

$—O—CO—CH_2—CH(SO_3M)—COOM$,

$—O—SO_3M$,

$—SO_3M$,

—O—CO—CH=CH—COOM,

$—NR—CH_2—CH_2—SO_3M$,

$—NR— CH_2 —COOM$ und

$—O—(CH_2)_2—SO_3M$

in welchen

M ein Kation,

R ein Wasserstoffatom oder eine Methylgruppe bedeutet, oder

Z steht, falls W eine Gruppe der Formel $—O—CH_2—CHOH—CH_2—$ ist, für gleiche oder verschiedene Reste der Formeln

$—SO_3M$,

$—NR—CH_2—CH_2—SO_3M$,

$—NR— CH_2 —COOM$ und

$—O—(CH_2)_2—SO_3M$,

in welchen

R und M die obengenannten Bedeutungen haben,

ausgenommen die Oxalkylierungsprodukte von dimeren Friedel-Crafts-Reaktionsprodukten aus 1 Mol eines Phenols und 2 Mol eines ungesättigten Fettsäureesters einer ungesättigten Fettsäure von 10 bis 22 C-Atomen und einem einwertigen Alkohol von 1 bis 8 C-Atomen gemäß der DE—A—2 161 097.

2. Verbindungen nach Anspruch 1, dadurch gekennzeichnet, daß Y für $—CH_2—CH_2—$ steht.

3. Verbindungen nach Anspruch 1 bis 3, dadurch gekennzeichnet, daß Z, sofern W eine direkte Bindung ist, für —OH, $—O—CO—CH_2—CH(SO_3M)—COOM$, $—O—SO_3M$, oder —O—CO—CH=CH—COOM steht, wobei M die in Anspruch 1 genannte Bedeutung hat.

4. Verbindungen nach Anspruch 1 bis 3, dadurch gekennzeichnet, daß M Wasserstoff, ein Alkalimetall, Erdalkalimetall, Ammonium oder eine sich von einem niedermolekularen Alkyl- oder Alkylolamin ableitende Ammoniumgruppe oder ein daraus hergestelltes Oxalkylat, wie es durch Anlagerung von 1 bis 150 Mol Ethylenoxid und/oder Propylenoxid auf ein Mol Alkylamin oder Alkylolamin erhalten wird, bedeutet.

5. Verbindungen nach Anspruch 1 bis 4, dadurch gekennzeichnet, daß n für 1 bis 19 steht.

6. Verbindungen nach Anspruch 1 bis 5, dadurch gekennzeichnet, daß m eine Zahl von 1 bis 3 ist, wobei die Gruppen $(Y—O)_n—Y—W—Z$ gleich oder verschieden sind, wenn m 2 oder 3 ist.

7. Verbindungen nach Anspruch 1 bis 6, dadurch gekennzeichnet, daß A das Friedel Crafts-Umsetzungsprodukt eines Hydroxyaromaten mit einer ungesättigten Fettsäure oder deren Ester ist.

8. Verbindungen nach Anspruch 1 bis 6, dadurch gekennzeichnet, daß A das Friedel Crafts-Umsetzungsprodukt eines Hydroxyaromaten mit einer ungesättigten Fettsäure ist, deren freie Carboxygruppe mit einem niedermolekularen mehrwertigen Alkohol oder Alkylolamin verestert ist.

9. Verbindungen nach Anspruch 1 bis 6, dadurch gekennzeichnet, daß A das Friedel Crafts-Umsetzungsprodukt eines Hydroxyaromaten mit einem ungesättigten Fettalkohol ist.

10. Verbindungen nach Anspruch 1, dadurch gekennzeichnet, daß A das Umsetzungsprodukt von Hydroxyaromaten mit ungesättigten Fetten oder Ölen ist.

11. Verbindungen nach Anspruch 1 und 10, dadurch gekennzeichnet, daß A das Umsetzungsprodukt von 1 Mol Rizinusöl mit 1—3 Mol eines Hydroxyaromaten ist.

12. Verwendung der Verbindungen nach Anspruch 1 bis 11 als grenzflächenaktive Mittel.

13. Verwendung der Verbindungen nach Anspruch 1 bis 11 als Dispergier-, Netz-, Emulgier- und Färbereihilfsmittel.

## Revendications

1. Composés répondant à la formule générale 1:

$$A[(Y-O)_n-Y-W-Z]_m \qquad (1)$$

dans laquelle:

A représente le radical d'un alcool gras modifié par un hydroxy-aryle ou d'un acide gras modifié par un hydroxy-aryle ou d'un produit d'estérification d'un tel acide avec un alcool,

m représente un nombre entier de 1 à 7, les

Y représentent chacun, indépendamment les uns des autres, un radical répondant à l'une des formules suivantes:

$$-CH_2-CH_2- \text{ et } -CH_2-\underset{\displaystyle CH_3}{\underset{|}{CH}}-,$$

n représente un nombre entier de O à 149,

W représente une liaison directe ou un radical de formule:

$$-O-CH_2-CHOH-CH_2-,$$

les

Z représentent chacun indépendamment les uns des autres, dans le cas où W représente une liaison directe: un radical répondant à l'une des formules:

$-OH$,

$-O-CO-CH_2-CH(SO_3M)-COOM$,

$-O-SO_3M$,

$-SO_3M$,

$-O-CO-CH=CH-COOM$,

$-N(R)-CH_2-CH_2-SO_3M$,

$-N(R)-CH_2-COOM$ et

$-O-(CH_2)_2-SO_3M$

dans lesquelles

M représente un cation et R un atome d'hydrogène ou un radical méthyle,

ou, dans le cas où W représente un radical $-O-CH_2-CHOH-CH_2-$: un radical répondant à l'une des formules:

$-SO_3M$,

$-N(R)-CH_2-CH_2-SO_3M$,

$-N(R)-CH_2-COOM$ et

$-O-(CH_2)_2-SO_3M$,

dans lesquelles R et M ont les significations précédemment données, sauf les produits d'alcoxylation de produits dimères obtenus par une réaction de Friedel et Crafts à partir de 1 mole d'un phénol et de 2 moles d'un ester dérivant d'un acide gras insaturé contenant de 10 à 22 atomes de carbone et d'un mono-alcool contenant de 1 à 8 atomes de carbone selon le DE—A—2 161 097.

2. Composés selon la revendication 1 dans lesquels Y représente un radical $-CH_2-CH_2-$.

3. Composés selon l'une des revendications 1 et 2, caractérisés en ce que Z, dans le cas où W représente une liaison directe, désigne un radical $-OH$, $-O-CO-CH_2-CH(SO_3M)-COOM$, $-O-SO_3M$ ou $-O-CO-CH=CH-COOM$, le symbole M ayant la signification donnée à la revendication 1.

4. Composés selon l'une quelconque des revendications 1 à 3, caractérisés en ce que M représente l'hydrogène, un métal alcalin, un métal alcalino-terreux, le radical ammonium ou un radical ammonium

dérivant d'une alkylamine ou alkylolamine à bas poids moléculaire ou un dérivé d'alcoxylation d'un tel radical comme on peut en obtenir en fixant de 1 à 150 moles d'oxyde d'éthylène et/ou d'oxyde de propylène sur 1 mole d'alkylamine ou d'alkylolamine.

5. Composés selon l'une quelconque des revendications 1 à 4, caractérisés en ce que n désigne un nombre de 1 à 19.

6. Composés selon l'une quelconque des revendications 1 à 5, caractérisés en ce que m représente un nombre de 1 à 3, les radicaux $—(Y—O)_n—Y—W—Z$ pouvant être identiques ou différents lorsque m est égal à 2 ou à 3.

7. Composés selon l'une quelconque des revendications 1 à 6, caractérisés en ce que A représente le radical d'un produit obtenu par une réaction de Friedel et Crafts entre un composé aromatique hydroxylé et un acide gras insaturé ou un ester d'un tel acide.

8. Composés selon l'une quelconque des revendications 1 à 6, caractérisés en ce que A représente le radical d'un produit obtenu par une réaction de Friedel et Crafts entre un composé aromatique hydroxylé et un acide gras insaturé dont le radical carboxy libre est estérifié par un polyol à bas poids moléculaire ou une alkylolamine.

9. Composés selon l'une quelconque des revendications 1 à 6, caractérisés en ce que A représente le radical d'un produit obtenu par une réaction de Friedel et Crafts entre un composé aromatique hydroxylé et un alcool gras insaturé.

10. Composés selon la revendication 1 caractérisés en ce que A représente le radical d'un produit résultant de la réaction d'un composé aromatique hydroxylé et de graisses ou d'huiles insaturées.

11. Composés selon l'une des revendications 1 et 10, caractérisés en ce que A représente le radical d'un produit résultant de la réaction de 1 mole d'huile de ricin avec de 1 à 3 moles d'un composé aromatique hydroxylé.

12. Application des composés selon l'une quelconque des revendications 1 à 11 comme surfactifs.

13. Application des composés selon l'une quelconque des revendications 1 à 11 comme dispersants, mouillants, émulsionnants et adjuvants de teinturerie.

**Claims**

1. Compounds of the formula (1)

$$A\!\left[(Y—O)_n—Y—W—Z\right]_m \qquad (1)$$

in which

A is the radical of an oxaryl-modified fatty alcohol or of an oxaryl-modified fatty acid or of an esterification product thereof with an alcohol,

m is an integer from 1 to 7,

Y denotes in each case identical or different radicals of the formulae

$$—CH_2—CH_2— \text{ and } —CH_2—\underset{\displaystyle CH_3}{\underset{|}{CH}}—$$

n is an integer from zero to 149,

W is a direct bond or a group of the formula

$$—O—CH_2—CHOH—CH_2—,$$

Z denotes, provided that W is a direct bond, identical or different radicals of the formulae

$$—OH,$$

$$—O—CO—CH_2—CH(SO_3M)—COOH,$$

$$—O—SO_3M,$$

$$—SO_3,$$

$$—O—CO—CH{=}CH—COOM,$$

$$—NR—CH_2—CH_2—SO_3M,$$

$$—NR—CH_2—COOM \text{ and}$$

$$—O—(CH_2)_2—SO_3M,$$

in which

M is a cation and

R is hydrogen or a methyl group, or

Z denotes, provided that W is a group of the formula $—O—CH_2—CHOH—CH_2—$, identical or different radicals of the formulae

$—SO_3M$,

$—NR—CH_2—CH_2—SO_3M$,

$—NR—CH_2—COOM$ and

$—O—(CH_2)_2—SO_3M$,

in which

R and M have the meanings mentioned above,

with the exception of oxalkylation products of dimer Friedel-Crafts-reaction products of 1 mol of a phenol and 2 mols of an unsaturated fatty acid ester derived from an unsaturated fatty acid having from 10 to 22 carbon atoms and from a monohydric alcohol having from 1 to 8 carbon atoms, according to DE—A—21 61 097.

2. Compounds as claimed in claim 1, characterized in that Y denotes $—CH_2—CH_2—$.

3. Compounds as claimed in claim 1 to 3, characterized in that Z denotes, provided that W is a direct bond, $—OH$, $—O—CO—CH_2—CH(SO_3M)—COOM$, $—O—SO_3M$ or $—O—CO—CH{=}CH—COOM$, in which M has the meaning mentioned in claim 1.

4. Compounds as claimed in claim 1 to 3, characterized in that M is hydrogen, an alkali metal, an alkaline earth metal, ammonium or an ammonium group derived from a low molecular weight alkylamine or an oxalkylate prepared therefrom by addition of 1 to 150 mols of ethylene oxide and/or propylene oxide on 1 mol of said alkyl amine or alkylolamine.

5. Compounds as claimed in claim 1 to 4, characterized in that n is a number from 1 to 19.

6. Compounds as claimed in claim 1 to 5, characterized in that m is an integer from 1 to 3 and the groups $(Y—O)_n—Y—W—Z$ are identical or different, if m is 2 or 3.

7. Compounds as claimed in claim 1 to 6, characterized in that A is a Friedel-Crafts reaction product of an aromatic hydroxy compound with an unsaturated fatty acid or an ester thereof.

8. Compounds as claimed in claim 1 to 6, characterized in that A is a Friedel-Crafts reaction product of an aromatic hydroxy compound with an unsaturated fatty acid, the free carboxy group of which is esterified with a low molecular weight polyhydric alcohol or alkylolamine.

9. Compounds as claimed in claim 1 to 6, characterized in that A is a Friedel-Crafts reaction product of an aromatic hydroxy compound with an unsaturated fatty alcohol.

10. Compounds as claimed in claim 1 to 6, characterized in that A is the reaction product of an aromatic hydroxy compound with an unsaturated fat or oil.

11. Compounds as claimed in claim 1 and 10, characterized in that A is a reaction product of 1 mol of castor oil with 1 to 3 mols of an aromatic hydroxy compound.

12. Use of the compounds as claimed in claim 1 to 11 as surface active agents.

13. Use of the compounds as claimed in claim 1 to 11 as auxiliaries for dispersing, wetting, emulsifying and dying.